# EUROPÄISCHE PATENTANMELDUNG

(11) **EP 4 644 178 A1**
(43) Veröffentlichungstag der Anmeldung: **05.11.2025**
(21) Anmeldenummer: 25174080.9
(22) Anmeldetag: 02.05.2025
(51) Int. Cl.: B60P 3/22

(54) **AUFBAU FÜR EIN NUTZFAHRZEUG MIT EINEM FLUIDVERSORGUNGSSYSTEM**

(30) Priorität: 02.05.2024 DE 102024112383
(71) Anmelder: CubicCube GmbH, 76287 Rheinstetten (DE)
(72) Erfinder: Zawisla, Andreas Roman, 76137 Karlsruhe (DE); Rittmann, Frank, 76189 Karlsruhe (DE)
(74) Vertreter: Mertzlufft-Paufler, Cornelius

(57) **Zusammenfassung**

Die Erfindung schlägt einen Aufbau (1) für ein Nutzfahrzeug (2) vor, bei dem eine Wandung (4) einen Laderaum (3) umschließt. Der Aufbau (1) weist ein Fluidversorgungssystem (5) auf, wobei das Fluidversorgungssystem (5) einen Tank (7) umfasst, der zumindest einen Teil (8) einer Seitenwand (6) der Wandung (4) auskleidet

## Beschreibung

Die Erfindung betrifft einen Aufbau für ein Nutzfahrzeug umfassend eine einen Laderaum umschließende Wandung und ein Fluidversorgungssystem, wobei die Wandung Seitenwände umfasst. Derartige Aufbauten sind in der Praxis bekannt.

Der Erfindung liegt die Aufgabe zugrunde, die Nutzbarkeit eines solchen Aufbaus zu verbessern.

Zur Lösung dieser Aufgabe schlägt die Erfindung die Merkmale von Anspruch 1 vor. Insbesondere wird somit erfindungsgemäß bei einem Aufbau der eingangs beschriebenen Art vorgeschlagen, dass das Fluidversorgungssystem einen Tank aufweist, wobei der Tank zumindest einen Teil einer der Seitenwände auskleidet.

"Auskleidet" bedeutet, dass der Tank flächig an der Seitenwand angeordnet ist. So kann der Tank einen Teil einer inneren Wand des Laderaums und/oder des Aufbaus bilden. Insbesondere ist dabei die Breite des Tanks kleiner als dessen Länge und Höhe. Für einen Benutzer des Nutzfahrzeugs erscheint der Tank somit als ein Teil der inneren Wand des Laderaums und/oder des Aufbaus. So kann der Tank besonders platzsparend in dem Laderaum angeordnet sein. Damit kann dem Benutzer des Nutzfahrzeugs mehr Platz im Laderaum zur Verfügung stehen, beispielsweise um Arbeiten durchzuführen oder um andere Gegenstände zu lagern.

Denkbar ist auch, dass der Tank in eine Seitenwand integriert ist. Dazu kann die Seitenwand doppelwandig ausgebildet sein und der Tank oder das Tankvolumen kann zwischen einer Außenwand und einer Innenwand der Seitenwand angeordnet sein. Die beiden Wände der Seitenwand können hierbei auch zugleich die Wände des Tanks bilden.

Das Fluidversorgungssystem ermöglicht die Versorgung mit einem Fluid, also einem Gas oder einer Flüssigkeit, beispielsweise Wasser, für den entsprechenden Einsatzbereich des Nutzfahrzeugs. Insbesondere kann ein solches Nutzfahrzeug im Bereich der Rohrreinigung und/oder Kanalreinigung und/oder Fensterreinigung und/oder Fassadenreinigung eingesetzt werden, wo mit dem Fluid, beispielsweise Wasser oder einem anderen Reinigungsmedium, die Reinigung durchgeführt werden kann. Es sind aber auch andere Einsatzbereiche für das Nutzfahrzeug denkbar. Beispielsweise kann es sich auch um ein Löschfahrzeug handeln.

Bei dem Tank kann es sich um einen Behälter zur Speicherung einer Flüssigkeit und/oder eines Gases handeln. Bei dem Laderaum kann es sich beispielsweise um den Laderaum eines Kastenwagens handeln, der auf dem Fahrgestell eines Nutzfahrzeugs montierbar ist oder montiert ist.

Die Auskleidung der Seitenwand mit dem Tank ermöglicht es, in dem Aufbau einen Arbeitsbereich zu schaffen, der nicht von dem Tank versperrt ist. Hierdurch ist die Nutzbarkeit des Aufbaus verbessert.

Eine Wandung des Tanks kann aus Metall sein. Alternativ kann eine Wandung aus einem Kunststoff, insbesondere aus einem glasfaserverstärkten Kunststoff ausgebildet sein.

Die Wandung grenzt den Laderaum nach außen ab. Die Wandung kann Seitenwände, einen Boden und eine Decke des Laderaums umfassen. Diese können den Laderaum räumlich eingrenzen. Die Seitenwände sind dabei diejenigen Wände, welche den Laderaum in horizontaler Richtung abgrenzen, während der Boden und die Decke den Laderaum in vertikaler Richtung abgrenzen.

Bei einer vorteilhaften Ausgestaltung kann vorgesehen sein, dass der Tank mehr als 50% der Höhe der Seitenwand auskleidet. Bevorzugt kleidet der Tank mehr als 70%, besonders bevorzugt mehr als 80%, der Höhe der Seitenwand aus. Dadurch kann die Höhe des Laderaums optimal ausgenutzt werden, um ein Lagervolumen des Tanks möglichst groß auszugestalten. Zudem kann es besonders platzsparend sein, das Lagervolumen des Tanks in der Höhe zu vergrößern, statt es in der Breite zu vergrößern, was zu einer Verkleinerung des für den Benutzer verfügbaren Laderaums führen würde.

Bei einer weiteren vorteilhaften Ausgestaltung kann vorgesehen sein, dass der Tank ein Verhältnis von Höhe zu Breite und/oder von Länge zu Breite von mehr als 5:1 hat. Dadurch kann der Tank eine besonders schlanke Form aufweisen. Dies kann den Vorteil bieten, dass der Tank in einer Längsrichtung des Fahrzeugs eine Seitenwand zumindest teilweise auskleiden kann. Dadurch kann der Tank ein hohes Lagervolumen aufweisen und gleichzeitig platzsparend ausgeführt sein, da der Laderaum nicht in der Breite verkleinert wird.

Bevorzugt hat der Tank ein Verhältnis von Höhe zu Breite und/oder von Länge zu Breite von mehr als 10:1 hat. Damit kann das Lagervolumen des Tanks noch weiter vergrößert werden.

Bei einer weiteren vorteilhaften Ausgestaltung kann vorgesehen sein, dass die Seitenwand eine außenseitige Tankwand des Tanks bildet. So kann Material und Gewicht eingespart werden.

Bei einer weiteren vorteilhaften Ausgestaltung kann vorgesehen sein, dass innerhalb des Tanks zumindest ein Abstandselement, insbesondere ein Stab, angeordnet ist, wobei das Abstandselement jeweils mit einem Ende an einer Tankwand des Tanks befestigt ist. Das zumindest eine Abstandselement verbindet zwei, vorzugsweise entgegengesetzte, Wände des Tanks. Vorzugsweise ist das Abstandselement an den Wänden des Tanks durch eine Schweißverbindung und/oder eine Lötverbindung befestigt. Der Stab kann einen runden oder rechteckigen oder sonstigen Querschnitt aufweisen.

Das zumindest eine Abstandselement, insbesondere Stab, kann eine Steifigkeit des Tanks erhöhen. Somit kann der Tank stabiler ausgestaltet sein. Durch das Vorsehen mehrerer Abstandselemente, insbesondere Stäbe, kann die Steifigkeit des Tanks weiter erhöht werden.

Bei einer weiteren vorteilhaften Ausgestaltung kann vorgesehen sein, dass der Tank zumindest einen Anschluss aufweist. Über den zumindest einen Anschluss kann der Tank befüllt und/oder entleert werden. Vorzugsweise weist der Tank einen Anschluss zum Befüllen und einen weiteren Anschluss zum Entleeren auf. Denkbar ist aber auch, dass ein Befüllvorgang und ein Entleervorgang über denselben Anschluss durchgeführt werden.

Über den zumindest einen Anschluss kann der Tank auch an einen weiteren Tank und/oder an eine Pumpe angeschlossen sein. Der Anschluss kann als Durchgangsbohrung oder Schlauchkupplung oder Stutzen oder Flanschanschluss ausgeführt sein.

Bei einer weiteren vorteilhaften Ausgestaltung kann vorgesehen sein, dass die Wandung einen Boden des Laderaums umfasst, wobei der Boden einen Rahmen und eine auf dem Rahmen montierte Platte aufweist. Der Rahmen kann die Montage des Aufbaus auf einem Fahrgestell des Nutzfahrzeugs erleichtern, indem er beispielsweise als Adapter dient. Der Rahmen kann dabei eine auf das Fahrgestell angepasste Form aufweisen. Der Rahmen kann mit dem Fahrgestell über Schraubverbindungen verbunden werden.

Die Platte dient als Boden des Laderaums. Vorzugsweise handelt es sich bei der Platte um eine Metallplatte.

Bei einer weiteren vorteilhaften Ausgestaltung kann vorgesehen sein, dass ein Boden des Laderaums, beispielsweise der zuvor erwähnte Boden, eine auf der Platte montierte weitere Platte aufweist. Dadurch kann der Boden des Laderaums verstärkt werden. Zudem kann die weitere Platte den Vorteil einer Isolierung bieten. Weiter kann die weitere Platte die darunterliegende Platte vor Beschädigungen, beispielsweise durch auf den Boden fallende Gegenstände, schützen.

Vorzugsweise handelt es sich bei der Platte um eine Holzplatte. Die Holzplatte kann besonders gut als Isolierung dienen und/oder die darunterliegende Platte vor Beschädigungen schützen. Zudem kann die Holzplatte auch Beschädigungen an herunterfallende Gegenständen minimieren, da Holz weicher als beispielsweise Metall ist.

Bei einer weiteren vorteilhaften Ausgestaltung kann vorgesehen sein, dass der Boden eine oder mehrere Durchgangsbohrungen aufweist. Alternativ oder zusätzlich weist der Boden eine oder mehrere Aussparungen auf.

So können durch den Boden Rohre und/oder Schläuche gelegt werden, welche beispielsweise mit einem Ende an einem Anschluss des Tanks angeschlossen sind. Zudem können Durchgangsbohrungen und/oder Aussparungen es ermöglichen, den Platz, der sich unterhalb des Bodens und in einer Ebene mit dem Fahrgestell des Nutzfahrzeugs befindet, auszunutzen und so den insgesamt zur Verfügung stehenden Platz für den Laderaum optimal auszunutzen. Es kann vorgesehen sein, dass eine Anschlussleitung des Tanks die Durchgangsbohrung und/oder die Aussparung durchquert

Außerdem können Aussparungen für Räder des Nutzfahrzeugs vorgesehen sein.

Bei einer weiteren vorteilhaften Ausgestaltung kann vorgesehen sein, dass auf einem Boden des Laderaums, insbesondere auf dem zuvor erwähnten Boden, ein Sockel angeordnet ist, wobei der Tank auf dem Sockel aufliegt. Ein Sockel kann genau ein Sockel oder auch mehrere Sockel bedeuten.

Bei dem Sockel kann es sich beispielsweise um ein quaderförmiges Bauteil handeln. Es kann sich aber auch um ein anderes, beispielsweise ein säulenförmiges oder sonstig geformtes Bauteil handeln. Der Sockel kann aus Metall oder aus Holz oder aus einem sonstigen Material hergestellt sein.

Der Sockel kann dazu dienen, dass der Tank nicht auf dem Boden des Fahrzeugs aufliegt, sondern sich in einer bestimmten Höhe über dem Boden befindet. Dies ist insbesondere im Hinblick darauf von Vorteil, dass der Boden Aussparungen für Räder des Nutzfahrzeugs aufweisen kann. Die Räder ragen durch die Aussparungen an den Seiten des Laderaums in den Laderaum hinein. Durch das Auflegen des Tanks auf zumindest einem Sockel kann der Tank über den Rädern aufliegen und die Seitenwand über den Rädern auskleiden.

Ohne Sockel müsste der Tank auf dem Boden aufliegen und könnte - wegen der Räder - nicht die Seitenwand berühren. Dies würde den zur Verfügung stehenden Platz im Laderaum reduzieren.

An dem Sockel kann ein Stehfalz ausgebildet sein, an dem der Tank zum Anliegen kommt. Hierdurch kann erreicht werden, dass der Tank in seiner Position gehalten wird und nicht verrutschen kann.

Alternativ zur Verwendung von Sockeln ist es auch denkbar, den Tank mit Wölbungen auszugestalten, deren Formen den Aussparungen der Räder entsprechen, sodass der Tank trotzdem größtenteils an der Seitenwand anliegen würde. Lediglich an den Positionen der Räder würde der Tank nach innen gewölbt sein.

Bei einer weiteren vorteilhaften Ausgestaltung kann vorgesehen sein, dass der Tank an der Wandung fixiert ist. Bevorzugt ist der Tank mittels zumindest eines Gurtes an der Wandung fixiert. Der Gurt kann den Tank dabei von oben nach unten umfassen, also entlang einer Höhe des Tanks. Alternativ oder zusätzlich kann der Gurt den Tank entlang einer Längsrichtung des Nutzfahrzeuges, also entlang einer Länge des Tanks umfassen. Bevorzugt ist der Tank durch mehrere Gurte an der Wandung fixiert. Durch den oder die Gurte kann vermieden werden, dass der Tank sich während einer Fahrt des Nutzfahrzeugs bewegt. Weiter kann die Verwendung von Gurten den Vorteil bieten, dass die Tanks jederzeit schnell und unkompliziert ein- und ausgebaut werden können.

Bei einer weiteren vorteilhaften Ausgestaltung kann vorgesehen sein, dass zwischen der Seitenwand und dem Tank eine Isolierschicht vorgesehen ist. Alternativ oder zusätzlich kann zwischen der Seitenwand und dem Tank eine Dämmschicht vorgesehen sein. Die Isolierschicht kann zugleich auch die Dämmschicht sein. Durch die Isolierschicht kann eine Bildung von Kondenswasser an der Außenseite der Seitenwand, also an der Außenoberfläche des Aufbaus, die dadurch entstehen kann, dass die Temperatur des in dem Tank gelagerten Fluids geringer ist als die Umgebungstemperatur, vermieden werden. Außerdem kann so auch ein Gefrieren des in dem Tank gelagerten Fluids, beispielsweise Wasser, vermieden werden. Durch die Dämmschicht kann der Tank von Erschütterungen des Fahrzeugs geschützt sein.

Bei einer weiteren vorteilhaften Ausgestaltung kann vorgesehen sein, dass eine der Seitenwände zumindest teilweise aus U-förmigen Platten gebildet ist, wobei zwei gegenüberliegende Kanten einer jeweiligen U-förmigen Platte in den Laderaum hinein abstehen. Die U-förmigen Platten weisen also eine U-Form auf. Die beiden gegenüberliegenden Kanten der U-Form reichen in den Laderaum hinein, während das Mittelstück der U-Form nach außen gewölbt ist. "Außen" bedeutet hierbei: außerhalb des Laderaums.

Benachbarte der U-förmigen Platten sind an den abstehenden Kanten miteinander verbunden. Dadurch können benachbarte der U-förmigen Platten eine größere Kontaktfläche aufweisen, als wenn die Platten nicht U-förmig wären und somit keine abstehenden Kanten hätten. Dies kann den Zusammenbau erleichtern und die Stabilität der Seitenwand verbessern.

Bevorzugt sind die U-förmigen Platten miteinander verschraubt. Besonders bevorzugt sind die U-förmigen Platten in einer Längsrichtung des Nutzfahrzeugs in einer Reihe angeordnet.

Bei einer weiteren vorteilhaften Ausgestaltung kann vorgesehen sein, dass an einer zur Seitenwand gerichteten Tankwand des Tanks eine Vertiefung vorgesehen ist, bevorzugt so, dass sich die abstehenden Kanten der zuvor genannten U-förmigen Platten in der Vertiefung befinden.

Bei der Vertiefung kann es sich beispielsweise um eine nach innen gerichtete Wölbung der Tankwand handeln. Die Vertiefung kann dazu dienen, dass mit dem Tank - trotz der nach innen abstehenden Kanten der U-förmigen Platten der Seitenwand - die Seitenwand ausgekleidet werden kann, ohne Platz zwischen dem Tank und der Seitenwand zu verschwenden.

Bevorzugt ist die Vertiefung eine trapezförmige Vertiefung. Besonders bevorzugt weist die trapezförmige Vertiefung Schrägen auf, welche ein Anbringen des Tanks an der Seitenwand erleichtern. Dadurch muss der Tank - wegen der nach innen abstehenden Kanten der U-förmigen Platten - nicht zwangsläufig gerade auf die Seitenwand gelegt werden, sondern kann beim Einbau des Tanks aus verschiedenen Winkeln an die Seitenwand gelegt werden.

Bei einer weiteren vorteilhaften Ausgestaltung kann vorgesehen sein, dass das Fluidversorgungssystem einen zweiten Tank aufweist, wobei der zweite Tank zumindest einen Teil einer weiteren der Seitenwände auskleidet. Damit kann das insgesamt zur Verfügung stehende Tankvolumen vergrößert werden. Auch ist es so möglich, zwei verschiedene Fluide zu lagern.

Bevorzugt ist der zweite Tank wie der oben beschriebene Tank ausgeführt. Weiter bevorzugt sind die Tanks miteinander verbunden, beispielsweise über Schläuche und/oder Rohre.

Bei einer weiteren vorteilhaften Ausgestaltung kann vorgesehen sein, dass der oder die Tanks so angeordnet sind, dass in dem Laderaum ein Korridor ausgebildet ist. Der Korridor kann dabei so breit sein, dass ein Benutzer hindurchgehen kann. Das bedeutet, dass die Tanks so an den Seitenwänden angeordnet sind, dass in der Mitte des Laderaums genug Platz ist, damit ein Benutzer des Nutzfahrzeugs hindurchgehen kann. So kann der freie Platz als Arbeitsplatz oder als Verstauraum genutzt werden.

Bei einer weiteren vorteilhaften Ausgestaltung kann vorgesehen sein, dass das Fluidversorgungssystem einen Zwischentank aufweist, wobei der Zwischentank unterhalb eines Bodens des Laderaums, beispielsweise des bereits beschriebenen Bodens, angeordnet ist. Der Zwischentank kann ebenfalls zur Lagerung eines Fluids, also eines Gases oder einer Flüssigkeit, genutzt werden. So kann das insgesamt für das Nutzfahrzeug zur Verfügung stehende Tankvolumen vergrößert werden, ohne dass der zur freien Verfügung stehende Laderaum weiter verkleinert wird. Der Zwischentank kann allerdings auch ein deutlich kleineres Tankvolumen aufweisen als die zuvor beschriebenen Tanks. So können letztere der Fluidspeicherung dienen, während der Zwischentank lediglich einer Versorgung einer oder der Pumpe mit dem Fluid dienen kann.

Bevorzugt ist der Zwischentank in ein Fahrgestell des Nutzfahrzeugs integrierbar. "Integrierbar" kann hierbei bedeuten, dass der Zwischentank in einer Ebene des Fahrgestells des Fahrzeugs einsetzbar und an dem Fahrgestell befestigbar ist, beispielsweise über Verschraubungen.

Bei einer weiteren vorteilhaften Ausgestaltung kann vorgesehen sein, dass die Tanks untereinander fluidseitig verbunden sind. So kann das zu lagernde Fluid auf die Tanks aufgeteilt werden.

Bevorzugt sind die Tanks durch eine Schlauchleitung fluidseitig verbunden. Dabei kann es sich um genau eine Schlauchleitung oder um mehrere Schlauchleitungen handeln. Alternativ oder zusätzlich sind die Tanks durch eine Rohrleitung fluidseitig verbunden. Dabei kann es sich um genau eine Rohrleitung oder um mehrere Rohrleitungen handeln.

Bei einer weiteren vorteilhaften Ausgestaltung kann vorgesehen sein, dass das Fluidversorgungssystem eine Pumpe, die über einen Anschluss, beispielsweise den zuvor beschriebenen Anschluss, mit dem Tank oder den Tanks verbunden ist. Mit der Pumpe kann das Fluid aus den Tanks entnommen werden.

Bevorzugt handelt es sich bei der Pumpe um eine Hochdruckpumpe. So kann das Fluid, beispielsweise Wasser, bei Reinigungsarbeiten, zum Beispiel zum Spülen von Rohren und Kanälen, verwendet werden.

Bei einer weiteren vorteilhaften Ausgestaltung kann vorgesehen sein, dass das Fluidversorgungssystem einen Schlauch aufweist, der an dem Tank oder an den Tanks angeschlossen ist. Mit dem Schlauch kann das Fluid aus dem Tank dem jeweiligen Verwendungszweck zugeführt werden. Beispielsweise kann der Schlauch an eine externe Pumpe angeschlossen werden.

Alternativ oder zusätzlich ist der Schlauch an der Pumpe angeschlossen. Auf diese Weise kann das von der Pumpe geförderte Fluid direkt verwendet werden, beispielsweise zum Reinigen und/oder Spülen von Kanälen und/oder Rohren.

Bevorzugt handelt es sich bei dem Schlauch um einen Druckschlauch oder einen Hochdruckschlauch. Auf diese Weise kann der Schlauch hohen Drücken, die beispielsweise von der Pumpe aufgebaut werden, standhalten.

Bei einer weiteren vorteilhaften Ausgestaltung kann vorgesehen sein, dass der Aufbau eine Schlauchhaspel für einen Schlauch, beispielsweise den zuvor beschriebenen Schlauch, umfasst. Mit der Schlauchhaspel kann der Schlauch leicht und platzsparend verstaut werden.

Bevorzugt ist die Schlauchhaspel in dem Laderaum angeordnet. Auf diese Weise kann der Schlauch in dem Laderaum verstaut und transportiert werden.

Zur Lösung der genannten Aufgabe sind erfindungsgemäß die Merkmale des auf ein Nutzfahrzeug gerichteten nebengeordneten Anspruchs vorgesehen, wobei das Nutzfahrzeug einen Aufbau umfasst, welcher erfindungsgemäß, insbesondere wie zuvor beschrieben und/oder nach einem der auf eine Aufbau gerichteten Schutzansprüche, ausgebildet ist.

Bei dem Nutzfahrzeug kann es sich beispielsweise um einen Lastkraftwagen oder um einen Kastenwagen handeln. Das Nutzfahrzeug kann beispielsweise Einrichtungen zur Rohrbehandlung, Rohrreinigung oder Rohrinspektion aufweisen.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine horizontale Ansicht eines erfindungsgemäßen Aufbaus,
- Fig. 2: eine Draufsicht auf den Aufbau aus Fig. 1,
- Fig. 3: eine Innenansicht eines erfindungsgemäßen Tanks,
- Fig. 4: eine Detailansicht einer weiteren Ausführungsform eines erfindungsgemäßen Tanks.

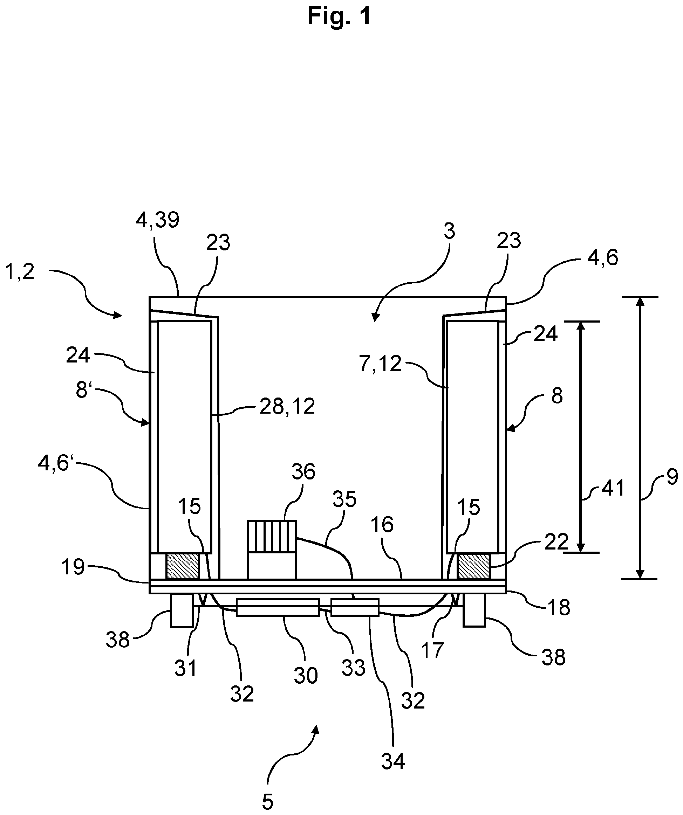

In Figur 1 ist ein Aufbau 1 zu sehen, der auf einem Nutzfahrzeug 2 montiert ist. Bei dem Nutzfahrzeug 2 kann es sich beispielsweise um einen Spülwagen handeln, der für die Rohr- und Kanalreinigung verwendbar ist. Eine Wandung 4 des Aufbaus 1 umschließt dabei einen Laderaum 3. Die Wandung 4 umfasst dabei zwei Seitenwände 6, 6', eine Decke 39 und einen Boden 16.

Der Aufbau 1 verfügt über ein Fluidversorgungssystem 5, welches in diesem Ausführungsbeispiel der Versorgung mit Wasser dient. Dazu umfasst das Fluidversorgungssystem 5 über drei Tanks 7, 28, 30. Der erste Tank 7 kleidet dabei einen Teil 8 der rechten Seitenwand 6 aus. Der zweite Tank 28 kleidet einen Teil 8' der linken Seitenwand 6' aus. Die Tanks 7, 28 kleiden dabei mehr als 50% der Höhe 9 der jeweiligen Seitenwand 6, 6' aus. So sind die Tanks 7, 28 in ihrer Höhe größtmöglich ausgestaltet und der verfügbare Laderaum 3 wird optimal ausgenutzt.

Die Tanks 7, 28 verfügen jeweils über einen Anschluss 15. An diesem Anschluss 15 ist jeweils eine Schlauchleitung 32 angeschlossen. Über die Schlauchleitungen 32 sind die Tanks 7, 28 fluidseitig mit einem einen Zwischentank bildenden dritten Tank 30 und einer Pumpe 34 verbunden.

Die Wandung 4 weist einen Boden 16 auf, der wiederum eine Platte 18 aufweist, die eine Metallplatte ist. Außerdem ist auf der Platte 18 eine weitere Platte 19, die eine Holzplatte ist, montiert. Unterhalb der Platte 18 ist ein Rahmen 17 zu sehen, durch den der Boden 16 mit einem Fahrgestell 31 des Nutzfahrzeugs 2 verbunden ist. Bei dieser Verbindung handelt es sich um eine Schraubverbindung.

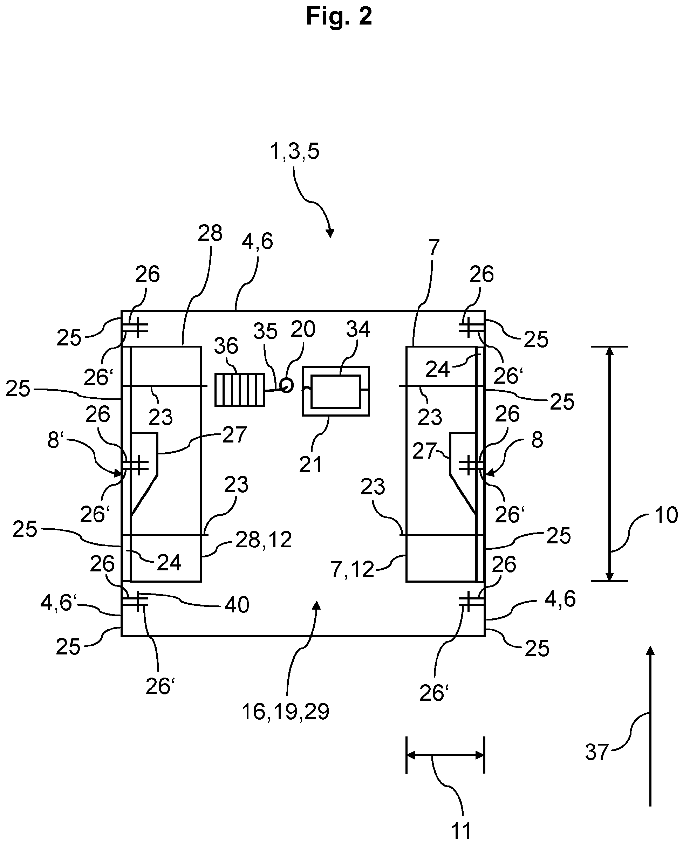

Auf dem Boden 16 sind Sockel 22 angeordnet. Die Tanks 7, 28 stehen auf diesen Sockeln 22. So stehen die Tanks 7, 28 über den Aussparungen für die Räder 38 des Nutzfahrzeugs 2. Die Tanks 7, 28 sind mittels Gurten 23 an der Wandung 4 fixiert. Die Gurte 23 verlaufen in diesem Fall vertikal, umfassen den jeweiligen Tank 7, 28 also von oben nach unten. Es wäre aber auch denkbar, dass die Gurte 23 die Tanks 7, 28 in einer horizontalen Richtung, also in einer Längsrichtung 37 (siehe Figur 2) umfassen.

Zwischen der Seitenwand 6, 6' und der außenseitigen, also zur jeweiligen Seitenwand 6, 6' gerichteten Tankwand 12 des Tanks 7, 28 ist jeweils eine Isolierschicht 24 vorgesehen. Diese dient der thermischen Isolierung der Tanks 7, 28. So kann eine Bildung von Kondenswasser an der Außenseite der Wandung 4 vermieden werden. Zudem kann so ein Gefrieren des in den Tanks 7, 28 gelagerten Wassers vermieden werden.

Der dritte Tank 30 des Fluidversorgungssystems 5 ist unterhalb des Bodens 16 angeordnet. Der dritte Tank 30 ist dabei in das Fahrgestell 31 integriert, sodass dieser sich in einer Ebene des Fahrgestells 31 befindet. Dies ist besonders platzsparend. Der dritte Tank 30 ist über eine Rohrleitung 33 fluidseitig mit der Pumpe 34 verbunden.

Bei der Pumpe 34 handelt es sich um eine Hochdruckpumpe, die den für die Kanal- und Rohrreinigung erforderlichen Druck liefern kann.

An der Pumpe 34 ist ein Schlauch 35, der ein Hochdruckschlauch ist, angeschlossen. Dieser ist im gezeigten Ausführungsbeispiel auf einer Schlauchhaspel 36 in dem Laderaum 3 aufgewickelt und kann jederzeit entwickelt und genutzt werden.

In Figur 2 ist in einer Draufsicht derselbe Aufbau 1 wie in Figur 1 zu sehen. Zur Erläuterung der mit denselben Bezugszeichen versehenen Elemente wird auf die obige Beschreibung von Figur 1 verwiesen.

Aus Figur 2 ist zu erkennen, dass die Tanks 7, 28 ein Verhältnis von Länge 10 des Tanks 7 zu Breite 11 des Tanks 7von mehr als 5:1 haben. Auch das Verhältnis von Höhe 41 des Tanks 7 zu Breite 11 des Tanks 7 ist in bevorzugter Ausführung mehr als 5:1.

Zudem ist zu erkennen, dass in dem Boden 16 eine Aussparung 21 vorgesehen ist. Diese dient dazu, Wartungsarbeiten an der Pumpe 34 komfortabel durchführen zu können. Zudem ist der Boden 16 mit einer Durchgangsbohrung 20 versehen, damit der Schlauch 35 auf die Unterseite des Bodens 16 geführt werden kann.

Die Seitenwände 6, 6' sind jeweils aus drei U-förmigen Platten 25 gebildet. Die U-förmigen Platten 25 haben Kanten 26, 26', die in den Laderaum 3 hineinragen. An den Kanten 26, 26' sind benachbarte U-förmige Platten 25 jeweils durch eine Schraube 40 miteinander verbunden. Durch die Verwendung der U-förmigen Platten 25 kann die Wandung 4 sehr leicht montiert werden. Zudem ist dadurch die Steifigkeit der Seitenwände 6, 6' verbessert.

Die Tanks 7, 28 haben an der Stelle, an der sie auf die Kanten 26, 26' der jeweiligen Seitenwand 6, 6' treffen, eine trapezförmige Vertiefung 27. Folglich können die Tanks 7, 28 trotz der abstehenden Kanten 26, 26' an die jeweilige Seitenwand 6, 6' geschmiegt sein. So wird der Platz im Laderaum 3 optimal ausgenutzt.

Die trapezförmige Vertiefung 27 weist zudem eine Schräge auf, durch die die Montage erleichtert wird.

Aufgrund der platzsparenden Anordnung der Tanks 7, 28 ist in dem Laderaum 3 ein Korridor 29 ausgebildet. Durch diesen kann sich ein Benutzer des Nutzfahrzeugs 2 problemlos bewegen.

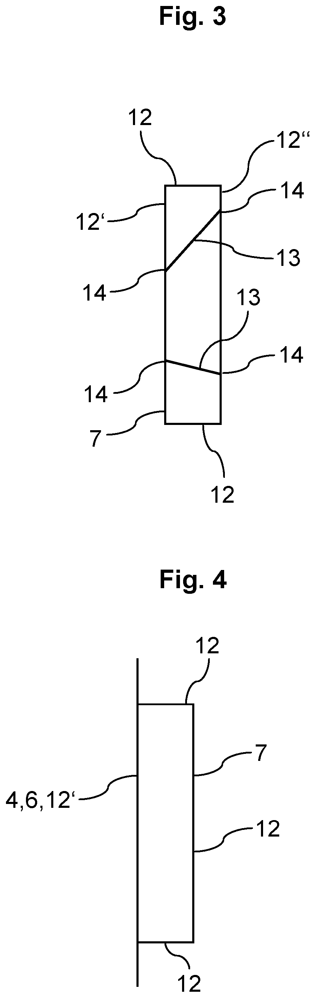

In Figur 3 ist das Innere eines erfindungsgemäßen Tanks 7 gezeigt. Der Tank 7 weist im Inneren zwei Stäbe 13 auf. Die Stäbe 13 verbinden dabei zwei gegenüberliegende Tankwände 12', 12". Die Stäbe 13 sind dazu jeweils mit einem Ende 14 an einer Tankwand 12', 12" verschweißt. Somit ist der gezeigte Tank 7 besonders formstabil.

In Figur 4 ist eine Detailansicht eines Tanks 7 zu sehen, in der ein Abschnitt einer Wandung 4 eines Aufbaus 1 dargestellt ist. Dabei sind drei Tankwände 12 des Tanks wie oben ausgeführt. Die vierte Tankwand 12' wird jedoch, im Gegensatz zu den Ausführungsbeispielen oben, von einer Seitenwand 6 der Wandung 4 gebildet. Diese Variante des Aufbaus 1 ist besonders platz-, gewichts- und kostensparend.

Die Erfindung schlägt einen Aufbau 1 für ein Nutzfahrzeug 2 vor, bei dem eine Wandung 4 einen Laderaum 3 umschließt. Der Aufbau 1 weist ein Fluidversorgungssystem 5 auf, wobei das Fluidversorgungssystem 5 einen Tank 7 umfasst, der zumindest einen Teil 8 einer Seitenwand 6 der Wandung 4 auskleidet.

### Bezugszeichenliste

- 1: Aufbau
- 2: Nutzfahrzeug
- 3: Laderaum
- 4: Wandung
- 5: Fluidversorgungssystem
- 6: Seitenwand
- 7: Tank
- 8: Teil (von 6)
- 9: Höhe (von 6)
- 10: Länge (von 7)
- 11: Breite (von 7)
- 12: Tankwand
- 13: Stab
- 14: Ende (von 13)
- 15: Anschluss (von 7)
- 16: Boden
- 17: Rahmen
- 18: Platte (von 16)
- 19: weitere Platte (von 16)
- 20: Durchgangsbohrung (von 16)
- 21: Aussparung (von 16)
- 22: Sockel
- 23: Gurt
- 24: Isolierschicht
- 25: U-förmige Platte
- 26: Kante (von 25)
- 27: Vertiefung (von 12)
- 28: zweiter Tank
- 29: Korridor
- 30: dritter Tank
- 31: Fahrgestell (von 2)
- 32: Schlauchleitung
- 33: Rohrleitung
- 34: Pumpe
- 35: Schlauch
- 36: Schlauchhaspel
- 37: Längsrichtung
- 38: Rad (von 2)
- 39: Decke
- 40: Schraube
- 41: Höhe (von 7)

## Patentansprüche

1. Aufbau (1) für ein Nutzfahrzeug (2) umfassend eine einen Laderaum (3) umschließende Wandung (4) und ein Fluidversorgungssystem (5), wobei die Wandung (4) Seitenwände (6, 6') umfasst, **dadurch gekennzeichnet, dass** das Fluidversorgungssystem (5) einen Tank (7) aufweist, wobei der Tank (7) zumindest einen Teil (8) einer der Seitenwände (6) auskleidet.

2. Aufbau (1) nach dem vorangehenden Anspruch, **dadurch gekennzeichnet, dass** der Tank (7) mehr als 50%, bevorzugt mehr als 70%, besonders bevorzugt mehr als 90%, einer Höhe (9) der Seitenwand (6) auskleidet, insbesondere wobei der Tank (7) eine gesamte Höhe und/oder eine gesamte Länge der Seitenwand auskleidet.

3. Aufbau (1) nach einem der vorangehenden Ansprüche, **dadurch gekennzeichnet, dass** der Tank (7) ein Verhältnis von Höhe (41) zu Breite (11) und/oder von Länge (10) zu Breite (11) von mehr als 5:1, insbesondere von mehr als 10:1 hat.

4. Aufbau (1) nach einem der vorangehenden Ansprüche, **dadurch gekennzeichnet, dass** die Seitenwand (6) eine außenseitige Tankwand (12) des Tanks (7) bildet und/oder dass innerhalb des Tanks (7) zumindest ein Abstandselement, insbesondere ein Stab (13), angeordnet ist, wobei das Abstandselement, insbesondere der Stab (13), jeweils mit einem Ende (14, 14') an einer Tankwand (12) des Tanks (7) befestigt ist.

5. Aufbau (1) nach einem der vorangehenden Ansprüche, **dadurch gekennzeichnet, dass** die Wandung (4) einen Boden (16) des Laderaums (3) umfasst, wobei der Boden (16) einen Rahmen (17) und eine auf dem Rahmen (17) montierte Platte (18), insbesondere eine Metallplatte, aufweist, insbesondere wobei der Boden (16) eine auf der Platte (18) montierte weitere Platte (19), insbesondere eine Holzplatte, aufweist.

6. Aufbau (1) nach einem der vorangehenden Ansprüche, **dadurch gekennzeichnet, dass** ein oder der Boden (16) mindestsens eine Durchgangsbohrung (20) und/oder Aussparung (21) aufweist, insbesondere wobei eine Anschlussleitung des Tanks (7) die Durchgangsbohrung (20) und/oder die Aussparung (21) durchquert.

7. Aufbau (1) nach einem der vorangehenden Ansprüche, **dadurch gekennzeichnet, dass** auf einem oder dem Boden (16) ein Sockel (22) angeordnet ist, wobei der Tank (7) auf dem Sockel (22) aufliegt, insbesondere wobei an dem Sockel (22) ein Stehfalz ausgebildet sein kann, an dem der Tank (7) zum Anliegen kommt.

8. Aufbau (1) nach einem der vorangehenden Ansprüche, **dadurch gekennzeichnet, dass** der Tank (7), vorzugsweise mittels zumindest eines Gurtes (23), an der Wandung (4) fixiert ist und/oder dass zwischen der Seitenwand (6) und dem Tank (7) eine Isolierschicht (24) und/oder eine Dämmschicht (24) vorgesehen ist.

9. Aufbau (1) nach einem der vorangehenden Ansprüche, **dadurch gekennzeichnet, dass** eine der Seitenwände (6, 6') zumindest teilweise aus U-förmigen Platten (25) gebildet ist, wobei zwei gegenüberliegende Kanten (26) einer jeweiligen U-förmigen Platte (25) in den Laderaum (3) hinein abstehen und wobei benachbarte der U-förmigen Platten (25) an den abstehenden Kanten (26) miteinander verbunden sind, und/oder dass an einer zur Seitenwand (6) gerichteten Tankwand (12) des Tanks (7) eine vorzugsweise trapezförmige Vertiefung (27) vorgesehen ist, insbesondere so, dass sich die abstehenden Kanten (26) der U-förmigen Platten (25) in der Vertiefung (27) befinden.

10. Aufbau (1) nach einem der vorangehenden Ansprüche, **dadurch gekennzeichnet, dass** das Fluidversorgungssystem (5) einen zweiten Tank (28) aufweist, wobei der zweite Tank (28) zumindest einen Teil (8') einer weiteren der Seitenwände (6') auskleidet, und/oder dass der oder die Tanks (7, 7') so angeordnet sind, dass in dem Laderaum (3) ein Korridor (29) ausgebildet ist.

11. Aufbau (1) nach einem der vorangehenden Ansprüche, **dadurch gekennzeichnet, dass** das Fluidversorgungssystem (5) einen Zwischentank (30) aufweist, wobei der Zwischentank (30) unterhalb eines oder des Bodens (16) des Laderaums (3) angeordnet ist, vorzugsweise wobei der Zwischentank (30) in ein Fahrgestell (31) des Nutzfahrzeugs (2) integrierbar ist.

12. Aufbau (1) nach einem der vorangehenden Ansprüche, **dadurch gekennzeichnet, dass** die Tanks (7, 28, 30) untereinander fluidseitig, vorzugsweise durch eine Schlauchleitung (32) und/oder eine Rohrleitung (33), verbunden sind.

13. Aufbau (1) nach einem der vorangehenden Ansprüche, **dadurch gekennzeichnet, dass** das Fluidversorgungssystem (5) eine Pumpe (34), vorzugsweise eine Hochdruckpumpe, aufweist, die über einen oder den Anschluss (15) mit dem oder den Tanks (7, 28, 30), insbesondere mit einem oder dem Zwischentank verbunden (30) ist.

14. Aufbau (1) nach einem der vorangehenden Ansprüche, **dadurch gekennzeichnet, dass** das Fluidversorgungssystem (5) einen Schlauch (35), vorzugsweise einen Druckschlauch oder einen Hochdruckschlauch, aufweist, der an dem oder den Tanks (7, 28, 30) oder an der Pumpe (34) angeschlossen ist, und/oder dass der Aufbau (1) eine Schlauchhaspel (36) für einen oder den Schlauch (35) umfasst, insbesondere wobei die Schlauchhaspel (36) in dem Laderaum (3) angeordnet ist.

15. Nutzfahrzeug (2) mit einem Aufbau (1) nach einem der vorangehenden Ansprüche.
